# EUROPEAN PATENT SPECIFICATION

(11) **EP 2 141 477 B1**
(45) Date of publication and mention of the grant of the patent: **26.12.2012**
(21) Application number: 07742077.6
(22) Date of filing: 20.04.2007
(51) Int. Cl.: G01N 1/06

(54) **REPLACEABLE BLADE FOR MICROTOME AND MEANS FOR KEEPING SLICED SPECIMEN AGAINST CURLING**
AUSTAUSCHBARE MIKROTOMKLINGE UND MITTEL ZUR VERHINDERUNG DES AUFROLLENS VON PRÄPARATSCHNITTEN
LAME REMPLAÇABLE POUR MICROTOME ET MOYEN D'ÉVITER L'ENROULEMENT DES COUPES DE SPÉCIMEN

(43) Date of publication of application: 06.01.2010
(73) Proprietor: Feather Safety Razor Co., Ltd., Osaka-shi, Osaka 531-0075 (JP)
(72) Inventor: ICHIYANAGI, Masao, Mino-shi Gifu-ken 501-3753 (JP); SASORI, Masahiro, Mino-shi Gifu-ken 501-3753 (JP)
(74) Representative: Viering, Jentschura & Partner
(86) International application number: PCT/JP2007/058642
(87) International publication number: WO 2008/136076

(56) References cited:
- GB-A- 1 178 976
- JP-A- 2000 009 608
- JP-A- 2000 237 992
- JP-U- 3 033 094
- US-A- 3 733 948
- US-A- 4 024 779
- US-A- 5 050 470
- US-A- 5 740 708
- US-A1- 2001 003 938
- US-A1- 2002 038 590
- US-A1- 2006 185 490
- US-A1- 2007 039 435

## Description

### TECHNICAL FIELD

The present invention relates to a replaceable blade for microtome and a curl prevention plate.

### BACKGROUND ART

Conventionally, there is known a sliding microtome and a rotary microtome for cutting mainly pathological samples into thin slices to prepare microscopic sections. The sliding microtome is provided with a blade body moving mechanism in which a replaceable blade holder for holding a replaceable blade is arranged so as to move freely parallel with a rail and a mechanism for arranging the sample holder for holding a sample so as to elevate it freely in a vertical direction. Then, in the sliding microtome, an operator manually operates the sample holder in such a manner that the sample protrudes on the moving path of the replaceable blade of the blade body moving mechanism, thereafter operating manually the replaceable blade holder of the blade body moving mechanism to cut off a part of the sample protruding upward from the moving path of the replaceable blade using the replaceable blade, thereby obtaining microscopic sections.

Further, in general, in the rotary microtome, the replaceable blade holder is arranged so as to be fixed on the main body, to which the sample holder is supported so as to move freely in a vertical direction. Then, the sample holder is moved in a vertical direction, thereby the sample is cut out thinly by the replaceable blade of the replaceable blade holder.

Then, in order to prevent any accidents such as injuries to an operator's hands and fingers while the operator uses a microtome, Patent Documents 1 to 3 each have proposed a constitution that a safety guard is arranged in front of the cutting edge near the replaceable blade holder.

Further, Patent Document 4 has proposed a blade body which is integrated into a safety guard and the safety guard is arranged in front of the cutting edge of the blade body, thereby providing safety measures in operating a microtome. Still further, Patent Document 5 has proposed a thin section preparing apparatus in which a guide roller is arranged in front of the cutting edge of the blade body.

A sample used in a microtome is a specimen such as a liver wrapped in paraffin that is sliced by a microtome to provide thin slices at thicknesses varying from 1 µm to 3 µm. These thin slices are curled in a similar manner as wood chips which are cut by a plane and curled. An operator is required to pick up the thus curled thin slices by using tweezers and float them on water in a water bath so that the slices are expanded.

Patent Documents 5 to 7 each have proposed a microtome equipped in the vicinity of a replaceable blade with a curl prevention member which comes into contact with thin slices in preparation of these, thereby preventing them from being curled.
However, the safety guard described in each of Patent Document 1 and Patent Document 2 is arranged across the entire length of a replaceable blade holder in the longitudinal direction and structurally connected to the replaceable blade holder so as to swing freely. Thus, the safety guard described in Patent Document 1 and Patent Document 2 is made larger in dimension.

Further, the safety guard described in Patent Document 3 is arranged so as to cover across the entire upper face of the replaceable blade excluding a part of the replaceable blade at which a sample is cut. Therefore, the safety guard described in Patent Document 3 is not only made larger in dimension but no safety means is provided in front of a cutting edge for cutting the sample, thus making it difficult to prevent accidents such as injuries to an operator's hands and fingers at this part.

Patent Document 4 has proposed a constitution in which one piece of metal material is used to make the blade body and the safety guard in an integrated manner. In this constitution, the distance between the cutting edge and the safety guard is short, thus making it extremely difficult to sharpen the blade body and adversely affects the productivity.

Further, Patent Documents 5 to 7 each have proposed a constitution in which a curl prevention member is arranged so as to form a slight clearance between the blade body and the curl prevention member, and thin slices cut out by the blade body pass through the clearance between the curl prevention member and the blade body, moving behind the blade body in a state that the curling is prevented.

The thus constituted curl prevention member described in each of Patent Documents 5 to 7 is arranged behind the blade body so that thin slices can be prevented from being curled and also moved backward. As a result, parts cut by the cutting edge of the blade body and thin slices are covered by the curl prevention member, thereby an operator finds it difficult to see the state of the thus cut thin slices or is unable to visually check the state instantly. When the operator is unable to visually check the state instantly, there is a delay in estimating the thickness of the thin slices and also a delay in adjusting the thickness of the thin slices.

Patent Document 8 has proposed a receiver for specimen slices, produced by slicing a tissue sample in a cryogenic microtome, including an upper member pivotably attached to a lower member and forming a space therebetween for receipt of the specimen slices.

Patent Document 9 has proposed a structure of a sample segmenting tool equipped with a microtome knife to prevent the curl of a sample at the time of cutting the sample from a sample block.

Patent Document 10 has proposed an anti-roll device for ultramicrotomes.

Patent Document 11 has proposed a device for stretching cryostatic sections including a sectioning knife and a plate.

Patent Document 12 has proposed a microtome including a suction system that is integral with a knife carrier.
Patent Document 1: Japanese Utility Model Registration No. 3033094
Patent Document 2: Japanese National Phase Laid-Open Patent Publication No. 2002-517715
Patent Document 3: Japanese Published Laid-Open Patent Publication No. 2003-130767
Patent Document 4: US Patent Application Publication No. 2006/185490
Patent Document 5: Japanese Published Laid-Open Patent Publication No. 51-134488
Patent Document 6: Japanese Laid Open Utility Model Publication No. 63-4994
Patent Document 7: Japanese National Phase Laid-Open Patent Publication No. 9-502516
Patent Document 8: US Patent Specification No. 5,050,470
Patent Document 9: Japanese Published Laid-Open Patent Publication No. 2000-009608
Patent Document 10: US Patent Specification No. 4,024,779
Patent Document 11: US Patent Application Publication No. 2002/038590
Patent Document 12: US Patent Specification No. 5,740,708

### DISCLOSURE OF THE INVENTION

An objective of the present invention is to provide a curl prevention plate for a replaceable blade member for microtome, which is simple in structure and capable of not only preventing thin slices cut out from a sample from being curled and protecting an operator's hands and fingers from being injured during cutting work or replacement of the replaceable blade, but also allowing an operator to visually check the state of the thin slices cut out from the sample instantly.

Another objective of the present invention is to provide a replaceable blade for microtome, which is simple in structure and capable of not only preventing thin slices cut out from a sample from being curled and protecting an operator's hands and fingers from being injured, but also allowing an operator to visually check the state of the thin slices cut out from the sample instantly to safely replace the replaceable blade. The replaceable blade member includes a blade body, which is disposable after a single use, but also include a single blade which can be reused after sharpening.

The present invention provides a replaceable blade for microtome having the technical features as disclosed in the independent claim.

Preferred embodiments of the present invention are described in the dependent claims.

A replaceable blade member according to the present invention is defined in claim 1. Depended claims 2-7 define further aspect of the invention.

Therefore, in the above described constitution, in general, a replaceable blade for microtome gives an oblique cutting to a sample. Since there is a narrow clearance between the side edge of the slit in a cutting direction and the cutting edge, thin slices begin to curl upon cutting of the sample by the replaceable blade member. Then, when the replaceable blade member and the sample are relatively moved, the sample is cut along the longitudinal direction of the slit. Then, at a portion of the thin slice where a clearance between the side edge of the slit in a cutting direction and the cutting edge is made longer, thin slices beginning to curl are raised, with the curling prevented by the side edge of the slit in a cutting direction, which is brought closer to the cutting edge, and the thin slices are completely cut by the replaceable blade, with this state kept. As a result, there is an advantage that the sample can be taken out easily.

### BRIEF DESCRIPTION OF THE DRAWINGS

Fig. 1 is a perspective view of a replaceable blade equipped with a curl prevention plate used for a microtome according to a first embodiment;
Fig. 2(a) is a plan view of the replaceable blade shown in Fig. 1;
Fig. 2(b) is a bottom view of the replaceable blade shown in Fig. 1;
Fig. 3 is a perspective view of a replaceable blade attached to a replaceable blade holder;
Fig. 4(a) is a partial cross-sectional view showing a positional relationship between the cutting edge of the replaceable blade and a slit;
Fig. 4(b) is a cross-sectional view of a main portion showing actions of the replaceable blade;
Fig. 4(c) is a cross-sectional view of a main portion showing actions of a replaceable blade (comparative example) devoid of curl preventive functions;
Fig. 5(a) is a plan view of a curl prevention plate according to a second embodiment;;
Fig. 5(b) is a plan view of a replaceable blade member;
Fig. 6 is a plan view of the curl prevention plate according to a third embodiment, which is in a developed state;
Fig. 7 is a perspective view of the curl prevention plate of the third embodiment;;
Fig. 8(a) is a plan view of the curl prevention plate according to a fourth embodiment, which is in a developed state;
Fig. 8(b) is a perspective view of the curl prevention plate of the fourth embodiment;;
Fig. 9(a) is an exploded perspective view of the curl prevention plate according to a fifth embodiment;;
Fig. 9(b) is a perspective view of the curl prevention plate of the fifth embodiment, which is assembled;
Fig. 10(a) is an exploded perspective view of a curl prevention plate according to a sixth embodiment;;
Fig. 10(b) is a perspective view of the curl prevention plate of the sixth embodiment, which is assembled;
Fig. 10(c) is a perspective view of a curl prevention member, which is a modification of the sixth embodiment: and;
Fig. 11 is a perspective view of the curl prevention plate of a seventh embodiment.

### BEST MODE FOR CARRYING OUT THE INVENTION

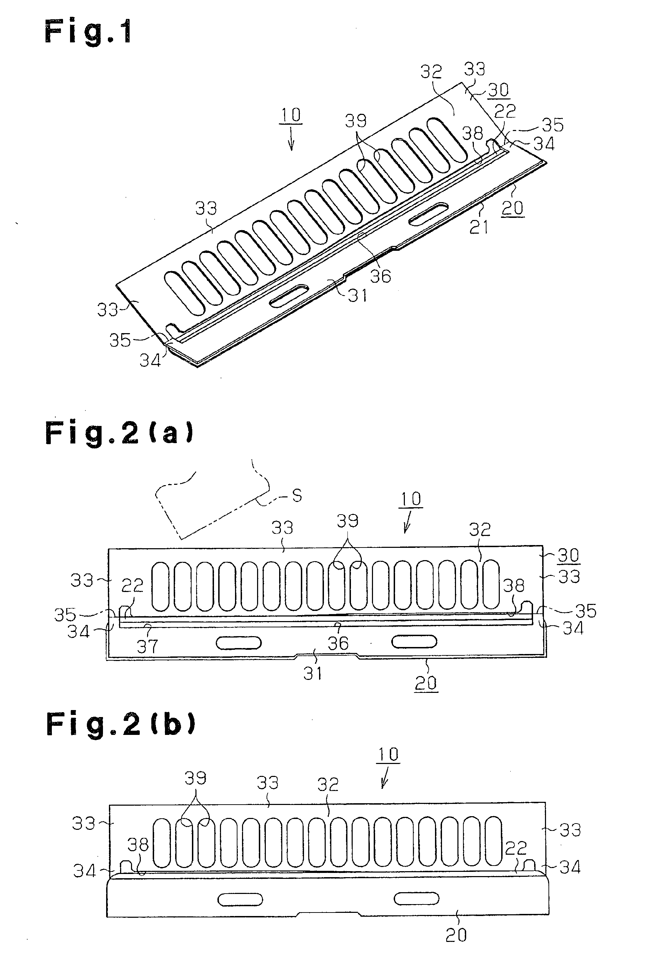

Hereinafter, an explanation will be made for a first embodiment in which the present invention is applied to a replaceable blade for a microtome by referring to Figs. 1 to 4.
A replaceable blade 10 is constituted by a replaceable blade member 20 and a curl prevention plate 30. As shown in Fig. 2(b), the replaceable blade member 20 is formed in a rectangular shape as in a conventional constitution, and a cutting edge 22 extending linearly is formed at the front edge of the replaceable blade member 20. The replaceable blade member 20 is in general made of stainless steel but may be made of other materials such as ceramics.

The curl prevention plate 30 is constituted so as to include an overlap plate portion 31 and a curl prevention plate portion 32 connected to the overlap plate portion 31.
In the present embodiment, the curl prevention plate 30 is formed by punching out a metal plate into a predetermined shape. There is no restriction on the material of the curl prevention plate 30. The material includes, for example, stainless steel, steel other than stainless steel, brass, aluminum, other nonferrous metals and nonmetals such as plastic and glass.

As shown in Figs. 1 and 2(a), the overlap plate portion 31 is formed in a rectangular shape, and the replaceable blade member 20 is attached and fixed to the lower face thereof. Means for fixing the replaceable blade member 20 to the overlap plate portion 31 may be appropriately selected, depending on the material of the curl prevention plate 30.

For example, an adhesive may be used as means for fixing the replaceable blade member 20 to the overlap plate portion 31. As long as the replaceable blade member 20 and the overlap plate portion 31 are made of a metal and can be welded, they may be jointed by spot welding or mechanically jointed with rivets or the like.

As shown in Fig. 2(a), the overlap plate portion 31 is formed so as to be shorter than the replaceable blade member 20, and both ends of the replaceable blade member 20 are projected from both ends of the overlap plate portion 31 in the longitudinal direction. Further, as shown in Fig. 2(a), the rear edge of the replaceable blade member 20 is projected toward further backward from the rear edge of the overlap plate portion 31. A curl prevention plate portion 32 is integrally connected to both ends of the front edge of the overlap plate portion 31 via a pair of connecting portions 34.

The curl prevention plate portion 32 is formed in a flat plate shape so as to be substantially rectangular. The curl prevention plate portion 32 is folded at a fold portion 35 located at the front end of the connecting portion 34, by which the curl prevention plate portion 32 is arranged obliquely so as to form an obtuse angle with respect to the overlap plate portion 31. When the curl prevention plate 30 is formed of a metal plate, it is preferable that a pressing machine is used to punch out the metal plate into a predetermined shape, and a folding line is, thereafter, formed at a portion corresponding to the fold portion 35 by using a chisei or the like to form the fold portion 35 along the folded line.

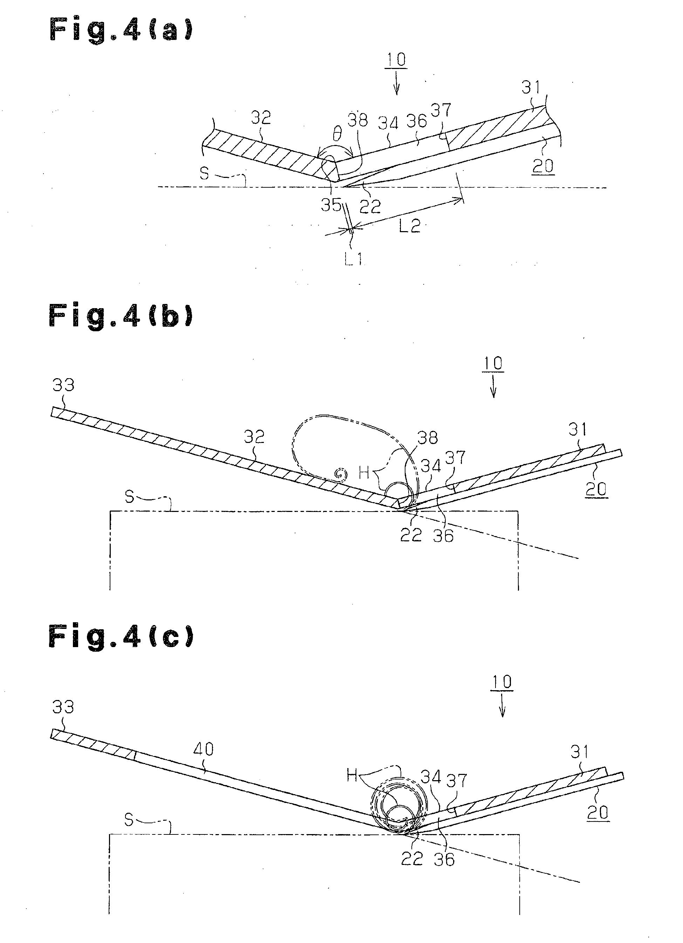

In the present embodiment, as shown in Fig. 4(a) and 4(b), an angle θ of the curl prevention plate portion 32 with respect to the overlap plate portion 31 is set at 150 degrees. There is no restriction on the degree, and any angle will be acceptable as long as it is an obtuse angle.

A slit 36 extending in the longitudinal direction of the overlap plate portion 31 so as to intersect the cutting direction is formed to penetrate between the overlap plate portion 31 excluding the connecting portion 34 and the curl prevention plate portion 32.
Further, the front edge 38 of the slit 36 is arranged apart forward from the cutting edge 22 of the replaceable blade member 20 by an offset amount L1. In this case, the offset amount L1 is preferably from 0.2 mm to 0.5 mm and more preferably from 0.1 mm to 0.5 mm. The present invention is not limited thereto, and the offset amount L1 may be set to be 0 or may be set to be slightly directed to the right from the cutting edge shown in Fig. 4(a). However, the offset amount L1 is preferably 2 mm or shorter at the maximum. The offset amount is set to be 2 mm or shorter because thin slices cut out by the cutting edge 22 are curled before they are placed on the curl prevention plate portion 32, if a clearance between the cutting edge 22 and the front edge 38 is greater than this length. The front edge 38 corresponds to the side edge of the slit 36 in a cutting direction.

Further, the offset amount L1 of the front edge 38 based on the cutting edge 22 of the replaceable blade member 20 is set to decrease gradually from the right to the left as viewed in Fig. 2(a). In this case, as shown in Fig. 2(a), the replaceable blade 10 is arranged on a replaceable blade holder 50 to be described later in such a manner that a sample S is cut into from the left end of the replaceable blade member 20. The offset amount L1 is set to decrease in a stepwise manner from the right to the left shown in Fig. 2(a).

In contrast, the offset amount L1 may be set to decrease in magnitude from the left to the right as viewed in Fig. 2(a) or may be set to decrease in a stepwise manner.
There is no restriction on the offset amount L2 backward at the rear edge 37 of the slit 36 from the cutting edge 22 of the replaceable blade member 20. However, it is desirable that the rear edge 37 is brought closer to the cutting edge 22 of the replaceable blade member 20 in view of preventing chattering of the cutting edge 22, that is, prevention of chatter marks of the cutting edge 22. For example, the offset amount L2 may be set to 0.5 mm or shorter.

As described above, the slit 36 is elongated in a substantially rectangular shape, by which the cutting edge 22 of the replaceable blade member 20 attached and fixed to the lower face of the overlap plate portion 31 is exposed via the slit 36.

When the curl prevention plate 30 is formed of a metal plate, there is no particular restriction on the thickness. It is, however, preferable that the curl prevention plate 30 is made equal in thickness to or slightly thinner than the replaceable blade member 20. This is because a thin slice H more advantageously overrides a metal plate when its thickness is reduced. However, since a portion over which the thin slice H rides is only available in the vicinity of the slit 36, the front edge 38 in particular may be made equal in thickness to or slightly thinner than the replaceable blade member 20 only in the vicinity of the slit 36, while remaining portions may be thicker than the replaceable blade member 20. This is because the thin slice H can easily override the curl prevention plate portion 32.

As shown in Fig. 1, a plurality of through holes 39 of the same size formed in an oblong shape are formed at the curl prevention plate portion 32 along the longitudinal direction. In the present embodiment, the through holes 39 are formed in an oblong shape. However, the through holes are not restricted to this shape but may include geometric shapes such as an oval, circle, rectangle and square or other shapes such as a star. Further, there is no restriction on the number of through holes 39 or no restriction on the arrangement either. Specifically, it is acceptable that the through holes are formed at the curl prevention plate portion 32 in such a manner that there is left an area at which the thin slice H formed by being cut by the cutting edge 22 of the replaceable blade member 20 can be in contact therewith. It is not desirable that the size of the each through hole is greater than the lateral width of the thin slice H made by cutting a sample. The through holes 39 allow an operator to visually check a sample in operation of a microtome via the through holes 39.

The through holes 39 allow air to be supplied into a space between the curl prevention plate portion 32 and the thin slice H in contact therewith, and the thin slice H is prevented from being firmly attached to the curl prevention plate portion 32.
The curl prevention plate portion 32, in particular, on the upper face may be coated with a lubricant. The coating can be made, for example, by using a solid lubricant, PTFE (polytetrafluoroethylene). However, there is no restriction on the lubricant, and any lubricant may be used as long as it can reduce friction with the thin slice H.

Guard portions 33 are formed at the front edge and side edges on the lateral sides excluding a portion at which the slit 36 of the curl prevention plate portion 32 is formed. These guard portions 33 are connected directly to the overlap plate portion 31 or indirectly with the curl prevention plate portion 32, and arranged further forward of the cutting edge of the replaceable blade member 20.

Next, an explanation will be made for a replaceable blade holder 50 for attaching the replaceable blade 10.
The replaceable blade holder 50 is attached in a removable manner to a blade attaching base for a microtome (not illustrated). The replaceable blade holder 50 is constituted by a main body 60 and a pressing body 70. The main body 60 is formed to have a triangular cross section, and a pair of linear grooves 61, 62, are formed parallel at the front and rear portions of the upper face. A pair of screw holes (not illustrated) are made at a predetermined clearance between a pair of the grooves 61, 62.

A smooth mounting surface 64 is formed from the acute-angle forming front edge 63 of main body 60 to the groove 61 so as to be lower than the surface 60a of the main body 60 by the thickness of the replaceable blade member 20 and a predetermined height corresponding to the thickness of the overlap plate portion 31 of the curl prevention plate 30.

The rear edge of the replaceable blade member 20 is uniformly in contact with the side wall 65 of the groove 61 when the replaceable blade 10 is mounted on the mounting surface 64. Contrastingly, a pressing portion 71 is formed at the front part of the pressing body 70, and a projection 73 to be fitted into the groove 62 of the main body 60 is located on the lower face thereof. A recess 72 is formed between the pressing portion 71 and the projection 73 on the pressing body 70.

Further, the present embodiment is arranged in such a manner that the pressing portion 71 of the pressing body 70 presses the replaceable blade 10 mounted on the mounting surface 64 when the projection 73 is fitted into the groove 62, and the front edge thereof is also aligned with the front end edge of the main body 60.

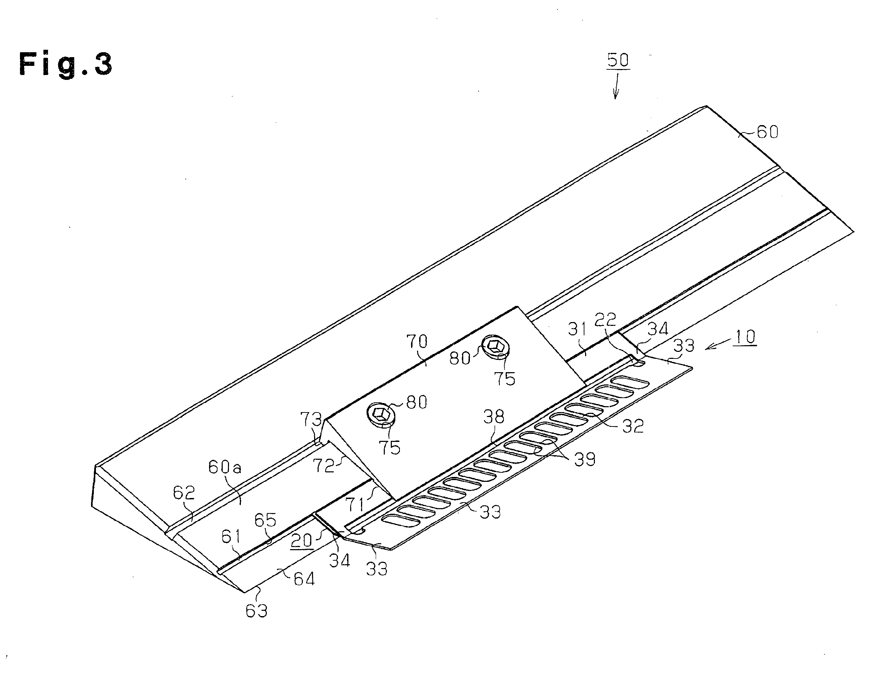

Further, a pair of stepped through holes 75 are formed on the pressing body 70, and a screw 80 is screwed via each of the stepped through holes 75 into the screw hole (not illustrated) of the main body 60 in a removable manner, by which the pressing body 70 is tightened and fixed to the main body 60. Since the main body 60 is thus tightened and fixed by the pressing body 70, the replaceable blade 10 mounted on the mounting surface 64 is pressed by the pressing body 70 and firmly held between the pressing body 70 and the main body 60, as shown in Fig. 3.

Now, an explanation will be made for the actions of the above-constituted replaceable blade 10.
The replaceable blade 10, which is kept attached to the replaceable blade holder 50, as shown in Fig. 3, is relatively moved with respect to a sample S when a microtome is used, as shown in Fig. 2(a). Then, the cutting edge 22 of the replaceable blade member 20 cuts the sample S obliquely from the left end side as viewed in Fig. 2(a). Then, the sample S is cut along the slit 36 in the longitudinal direction, and a thin slice H is cut out from the sample S, as shown in Fig. 4(b). In this case, the thus cut thin slice H is curled and moves forward, overriding the front edge 38, thereby it is in contact with the curl prevention plate portion 32. More specifically, at the curl prevention plate portion 32, the thin slice H is in contact with an area where no through holes 39 are made, by which the thin slice H is prevented from being curled. Further, when the replaceable blade member 20 and the sample S are relatively moved, the thin slice H is gradually guided by the curl prevention plate portion 32 and moved upwardly in a state that the curling is prevented as shown by the double doted and dashed line.

Then, the cutting edge 22 of the replaceable blade member 20 cuts the sample S from the left end and, thereafter, cuts the sample S entirely in the width direction, that is, the entire length of the replaceable blade member 20, thereby cutting out the right end of the sample S at the final stage of the cutting. Then, the thin slice H, which begins to curl, is raised, with the curling prevented by the front edge 38 which is brought closer to the cutting edge 22, at a portion where it becomes narrow in clearance between the front edge 38 of the slit 36 and the cutting edge 22. The thin slice H is completely cut by the replaceable blade, with this state kept.

As described above, in the present embodiment, the thin slice H cut out as shown in Fig. 4(b) is obtained, with the curling prevented by the curl prevention plate portion 32.
Fig. 4(c) shows a comparative example, in which the curl prevention plate portion 32 is omitted from the constitution of the replaceable blade 10 in the first embodiment. That is, the replaceable blade 10 is constituted in such a manner that the guard portion 33 is formed in a frame shape, the guard portion 33 is connected to the overlap plate portion 31 via the connecting portion 34, and a window portion 40, which is larger in opening area than the slit 36, is formed by being divided by a frame-shape guard portion 33 and a rear edge 37. In this comparative example, when the sample S is cut by the cutting edge 22 of the replaceable blade member 20, as shown in Fig. 4(c), thin slices H cut out from the sample S are curled continuously from the beginning to the final stage of the cutting due to the absence of the curl prevention plate portion 32.

According to the thus constituted replaceable blade 10, it is possible to prevent thin slices H cut out from the sample S from being curled and also prevent an operator's hands and fingers from being injured during cutting work or replacement of a replaceable blade. Further, the replaceable blade 10 is advantageous in that it allows an operator to visually check a state of the thin slices H cut out from the sample S instantly and is also simple in constitution.

Still further, in the replaceable blade 10 of the present embodiment, since the curl prevention plate portion 32 is arranged obliquely so as to form an obtuse angle with respect to the overlap plate portion 31, the thin slices H cut out from the sample S are fed in front of the cutting edge and prevented from being curled in a state that they are in contact with the curl prevention plate portion 32. Since the thin slices H cut out from the sample S are sent in front of the cutting edge, an operator can visually check the state of the thin slices H instantly.

In addition, in the replaceable blade 10 of the present embodiment, through holes 39 are formed on the curl prevention plate portion 32, by which an operator can visually check via the through holes 39 a state of the sample S relatively moved from the front of the cutting edge to the cutting edge prior to cutting. Further, when the thin slices H are in contact with the surface of the curl prevention plate portion 32, the surface at which the thin slices H are in contact is decreased in area and air is also supplied from the perspective hole 39 to a space between the thin slices H and the surface of the curl prevention plate portion 32 to prevent them from being firmly attached, thus the thin slices H are allowed to slide more easily.

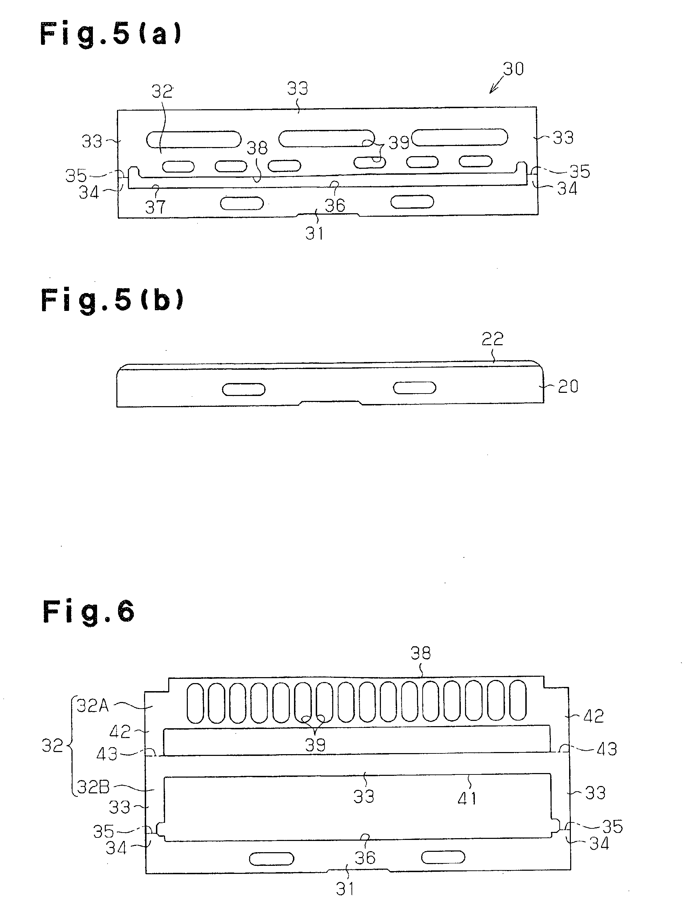

Next, an explanation will be made for a second embodiment, in which the present invention is applied to the curl prevention plate 30 by referring to Figs. 5(a) and 5(b). Components that are the same as or correspond to those already explained in the following embodiments including the second embodiment will be given the same symbols or numerals, and explanations thereof are omitted. Thus, an explanation will be made mainly for different constitutions. The second embodiment is different from the first embodiment in that the through holes 39 are different in shape and arrangement. In the first embodiment, the through holes 39 are all the same in size and located together in plurality. The second embodiment is different from the first embodiment in that two types of through holes 39 different in size are arrayed in two rows in the longitudinal direction.

The thus constituted curl prevention plate 30 will be used as follows. The replaceable blade member 20 shown in Fig. 5(b) is mounted on the mounting surface 64 of the replaceable blade holder 50 explained in the first embodiment in a state that it is overlapped on the lower face of the overlap plate portion 31. The pressing body 70 is tightened to the main body 60 by using screws 80, by which the curl prevention plate 30 and the replaceable blade member 20 are fixed to the replaceable blade holder 50.

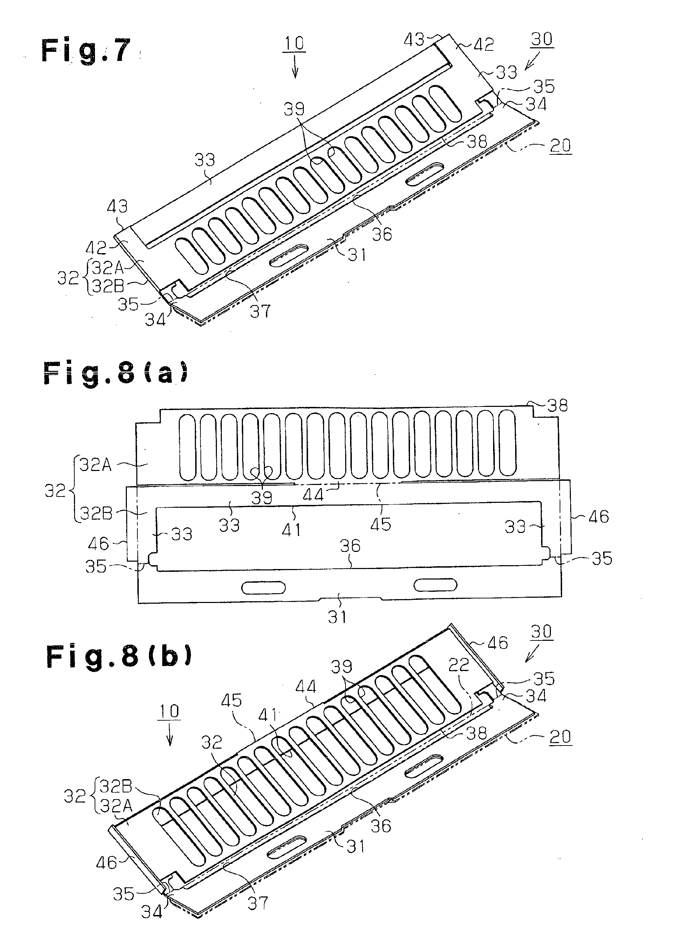

The thus constituted curl prevention plate 30 provides the same advantages as those of the first embodiment.
Next, an explanation will be made for a third embodiment in which the present invention is applied to the curl prevention plate 30 by referring to Figs. 6 and 7.

A pressing machine is used to punch a metal plate into a shape shown in Fig. 6 to form the curl prevention plate 30.
The metal plate punched out as shown in Fig. 6 is provided with a supporting frame 32B formed in a frame shape around a window portion 41 by an overlap plate portion 31 and a guard portion 33, and a plate-shape curl prevention member 32A connected to the supporting frame 32B via a pair of connecting portions 42 at both ends of the supporting frame 32B.

A curl prevention plate portion 32 is constituted by the supporting frame 32B and the curl prevention member 32A.
As shown in Fig. 6, a plurality of through holes 39 are located together on the curl prevention member 32A along the longitudinal direction. Then, a fold portion 43 is formed between the connecting portion 42 and the guard portion 33. This metal plate is folded in such a manner that the curl prevention member 32A is inverted at 180 degrees and bent down at the fold portion 43 to be overlapped on the supporting frame 32B, and the overlap plate portion 31 and the guard portion 33 are folded at the fold portion 35 to form an obtuse angle.

Then, as shown in Fig. 7, the curl prevention member 32A and the overlap plate portion 31 are arranged so as to form an obtuse angle, and a slit 36 is formed by side edges of the thus inverted curl prevention member 32A and the edge of the overlap plate portion 31 at the window portion 41. Therefore, one side edge of the thus inverted curl prevention member 32A corresponds to the front edge 38 of the slit 36, and the edge of the overlap plate portion 31 at the window portion 41 corresponds to the rear edge 37 of the slit 36.

Further, since each of the through holes 39 is connected to the window portion 41, it is possible to visually check the curl prevention plate portion 32 from above to below via the through holes 39 and the window portion 41.
The replaceable blade member 20 is attached and fixed to the lower face of the overlap plate portion 31, as in the first embodiment, by which the thus constituted curl prevention plate 30 forms the replaceable blade 10. Further, as in the second embodiment, the curl prevention plate 30 can be used with the replaceable blade member 20 overlapped on a replaceable blade holder 50.

According to the third embodiment, since the supporting frame 32B and the curl prevention member 32A are overlapped with each other, the curl prevention member 32A is consequently increased in rigidity at a portion on which the supporting frame 32B is overlapped. Further, according to the third embodiment, the curl prevention member 32A is folded into the supporting frame 32B, by which one sheet of metal plate is used to form the curl prevention plate portion 32.

Next, an explanation will be made for a fourth embodiment by referring to Figs. 8(a) and 8(b). The fourth embodiment is a modification of the third embodiment.
The fourth embodiment is devoid of the connecting portion 42 and fold portion 43 in the components of the third embodiment. In place of them, a punched-out metal plate is provided with a supporting frame 32B formed in a frame shape by the overlap plate portion 31 and the guard portion 33, and a plate-shape curl prevention member 32A connected to the supporting frame 32B via a single connecting portion 44 at the center of the guard portion 33 extended in the longitudinal direction. A fold portion 45 is formed between the connecting portion 44 and the guard portion 33.

Further, in the fourth embodiment, folded pieces 46 are connected respectively to the side edges of the guard portion 33, which connect both ends of the guard portion 33 extending in the longitudinal direction with the connecting portion 34.
These metal plates (folded pieces 46) are folded in such a manner that a curl prevention member 32A is inverted at 180 degrees and bent down at the fold portion 45 to be overlapped on the supporting frame 32B, and the overlap plate portion 31 and the guard portion 33 are folded at the fold portion 35 to form an obtuse angle. Then, as shown in Fig. 8(b), the curl prevention plate 30 is arranged so that the curl prevention member 32A and the overlap plate portion 31 form an obtuse angle, and also a slit 36 is formed by one side edge of the inverted curl prevention member 32A and the edge of the overlap plate portion 31 at the window portion 41.

Therefore, the side edge of the thus inverted curl prevention member 32A corresponds to the front edge 38 of the slit 36, and the edge of the overlap plate portion 31 at the window portion 41 corresponds to the rear edge 37 of the slit 36.

Further, as shown in Fig. 8(b), the folded piece 46 is folded at a right angle with respect to the guard portion 33. The folded pieces 46 are folded to increase the rigidity of the guard portion 33 having the folded pieces 46.

The replaceable blade member 20 is attached and fixed to the lower face of the overlap plate portion 31, as in the third embodiment, by which the thus constituted curl prevention plate 30 forms the replaceable blade 10. Further, as in the second embodiment, the curl prevention plate 30 can be used with the replaceable blade member 20 overlapped on a replaceable blade holder 50. The fourth embodiment provides the same advantages as those of the third embodiment.

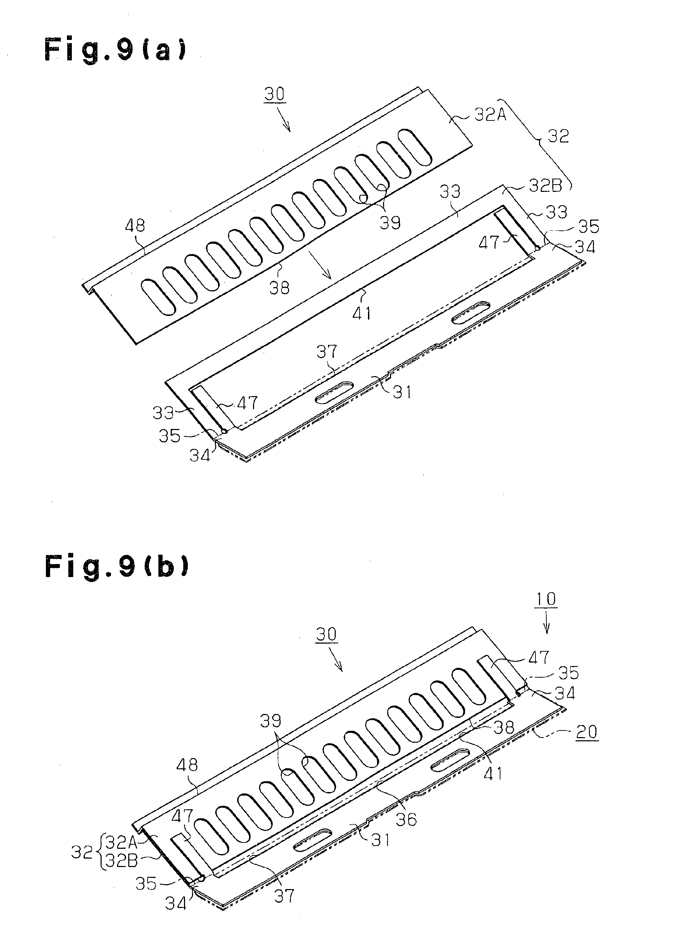

Next, an explanation will be made for the curl prevention plate of a fifth embodiment by referring to Fig. 9(a) and 9(b).
The curl prevention plate 30 is constituted by a curl prevention member 32A and an overlap plate portion 31 having a supporting frame 32B formed in a frame shape by the guard portion 33. A pressing machine is used to punch out respectively metal plates to form the curl prevention member 32A and the overlap plate portion 31 having the supporting frame 32B.

A pair of resilient grip pieces 47 are formed on both ends of the overlap plate portion 31 in the longitudinal direction parallel with the guard portion 33 connected to the connecting portion 34 so as to project into the window portion 41. The grip piece 47 corresponds to the grip portion.

A stopper 48 extending in the longitudinal direction is folded and formed at the front edge of the curl prevention member 32A in a cutting direction.
As shown in Fig. 9(b), the thus constituted curl prevention member 32A is attached by inserting both ends thereof in the longitudinal direction into a space between a pair of the grip pieces 47 and the guard portion 33 against the resilience of the grip piece 47. In this case, the stopper 48 of the curl prevention member 32A is engaged with the front edge of the guard portion 33. Further, the overlap plate portion 31 and the guard portion 33 are folded at the fold portion 35 to form an obtuse angle.

Then, as shown in Fig. 9(b), the curl prevention member 32A and the overlap plate portion 31 are arranged so as to form an obtuse angle, and a slit 36 is formed by side edges of the curl prevention member 32A and the edge of the overlap plate portion 31 at the window portion 41. In this state, the side edge of the curl prevention member 32A, that is, the rear edge, corresponds to the front edge 38 of the slit 36, and the edge of the overlap plate portion 31 at the window portion 41 corresponds to the rear edge 37 of the slit 36.

In the present embodiment, a curl prevention plate portion 32 is constituted by the curl prevention member 32A and the supporting frame 32B.
According to the present embodiment, the curl prevention member 32A is gripped by the grip piece 47 of the supporting frame 32B, thus making it possible to use the curl prevention member 32A different in material from the supporting frame 32B. As a result, it is possible to use a low-priced material, for example, for the curl prevention member 32A or to use a low-priced material for the supporting frame 32B, that is, the overlap plate portion 31.

The replaceable blade member 20 is attached and fixed to the lower face of the overlap plate portion 31, as in the third embodiment, by which the curl prevention plate 30 of the fifth embodiment can form the replaceable blade 10. Further; as in the second embodiment, the curl prevention plate 30 can be used with the replaceable blade member 20 overlapped on the replaceable blade holder 50.

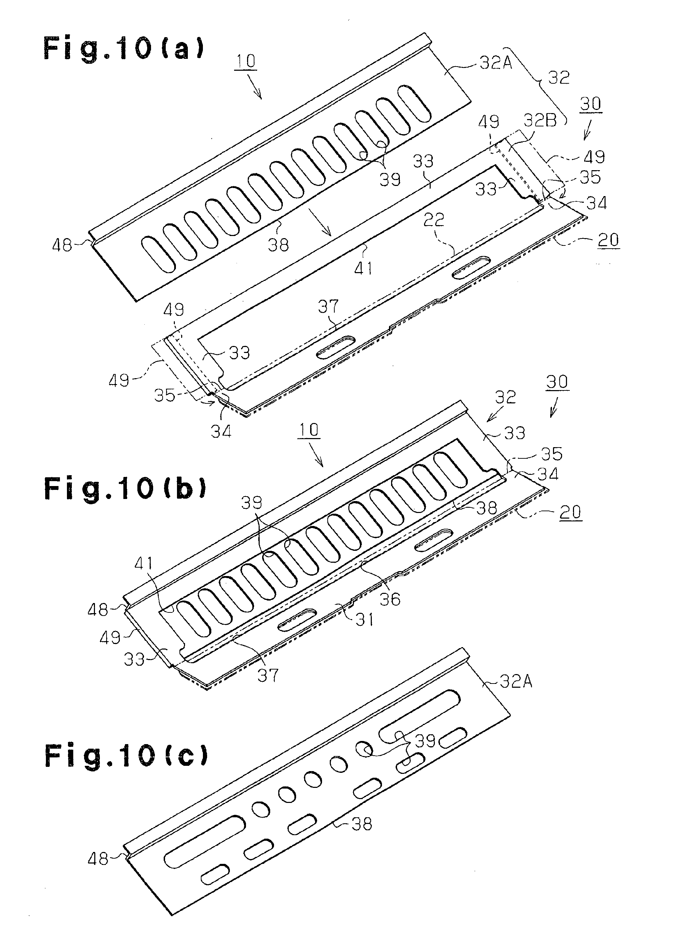

Next, an explanation will be made for the curl prevention plate of a sixth embodiment by referring to Figs. 10(a) and 10(b). The sixth embodiment is a modification of the fifth embodiment. That is, the sixth embodiment is provided with grip pieces 49 as grip portions folded and formed respectively on the lower faces at outer edges of a pair of guard portions 33 connected to the connecting portion 34 in place of the grip pieces 47 of the fifth embodiment. Others are constituted in the same manner as those of the fifth embodiment.

As shown in Fig. 10(b), the thus constituted curl prevention member 32A is attached by inserting both ends thereof in the longitudinal direction into a space between a pair of the grip pieces 49 and the guard portion 33 against the resilience of the grip piece 49. In this case, the stopper 48 of the curl prevention member 32A is engaged with the front edge of the guard portion 33. Further, the overlap plate portion 31 and the guard portion 33 are folded at the fold portion 35 to form an obtuse angle.

Then, as shown in Fig. 10(b), the curl prevention member 32A and the overlap plate portion 31 are arranged so as to form an obtuse angle, and a slit 36 is formed by side edges of the curl prevention member 32A and the edge of the overlap plate portion 31 at the window portion 41. In this state, the side edge of the curl prevention member 32A, that is, the rear edge, corresponds to the front edge 38 of the slit 36, and the edge of the overlap plate portion 31 at the window portion 41 corresponds to the rear edge 37 of the slit 36.

In the present embodiment, the curl prevention plate portion 32 is constituted by the curl prevention member 32A and the supporting frame 32B.
The present embodiment also provides the same advantages as those of the fifth embodiment.

The curl prevention member 32A shown in Fig. 10(c) is a modification of the fifth embodiment, in which the through holes 39 are different in size and arrangement from those made on the curl prevention member 32A shown by the solid line shown in Fig. 10(a). The through holes 39 may be changed in size, shape and arrangement, as necessary.

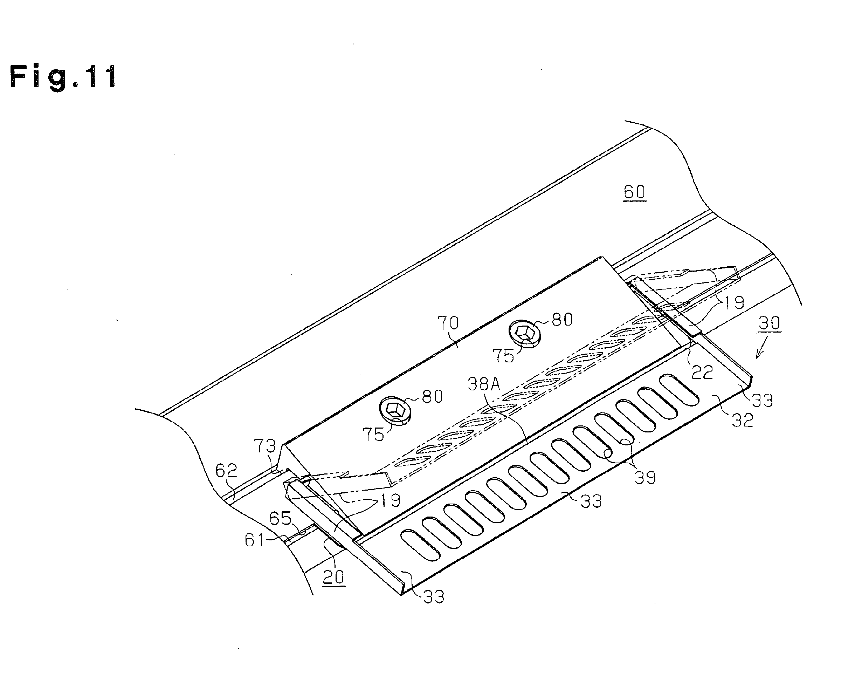

Next, an explanation will be made for the curl prevention plate of a seventh embodiment by referring to Fig. 11. In the present embodiment, the curl prevention plate 30 is provided with a curl prevention plate portion 32, guard portions 33 located in front of and on the lateral both ends of the curl prevention plate portion 32, and a support arm 19 integrally located at the guard portions 33 mounted on the lateral both ends of the curl prevention plate portion 32. The base end of the support arm 19 is supported on both end faces of the pressing body 70 of the replaceable blade holder 50 so as to swing freely. Then, when a microtome is not in use, as indicated by the double doted and dashed line, the curl prevention plate 30 can be retracted upwardly.

In contrast, when a microtome is in use, the pressing body 70 is arranged with the replaceable blade member 20 mounted on the mounting surface 64 being pressed and retained, so that the curl prevention plate portion 32 of the curl prevention plate 30 is positioned in front of the cutting edge 22 of the replaceable blade member 20, as indicated by the solid line shown in Fig. 11. The distance between the cutting edge 22 and the curl prevention plate portion 32, that is, an offset amount, is set on the basis of the length of the support arm 19. It is desirable that the offset amount is from 0.2 mm to 0.5 mm. The offset amount is not restricted to the above range but preferably 2 mm or lower at the maximum.

Further, an offset amount of the side edge 38A on the basis of the cutting edge 22 of the replaceable blade member 20 is set in a similar manner as the offset amount L1 is set in the first embodiment.
Since the curl prevention plate is constituted as described above, the curl prevention plate portion 32 can be used to prevent thin slices cut out from a sample from being curled and protect an operator's hands and fingers from being injured, and also the operator is allowed to visually check the state of the thin slices cut out from the sample instantly. Further, the curl prevention plate for replaceable blade can be made simple in constitution.

The embodiments are not restricted to the above constitutions. In the first embodiment or others, in which the curl prevention plate 30 is made of a metal material, through holes 39 are formed. However, when the curl prevention plate 30 is made of plastics or glass, it may be made transparent. In this case, the through holes 39 may be provided or omitted.

Further, in the first embodiment and others, when the curl prevention plate 30 is formed of a metal plate, the curl prevention plate 30 may be reinforced by cambering or drawing.

## Claims

1. A replaceable blade (10) for microtome having a replaceable blade member (20) and a curl prevention plate (30) for the replaceable blade member (20), the curl prevention plate (30) comprising:
an overlap plate portion (31) overlapped on the replaceable blade member (20); and
a curl prevention plate portion (32) having a guard portion (33) which is connected to the overlap plate portion (31) and arranged further forward of a cutting edge (22) of the replaceable blade member (20), the curl prevention plate (30) further comprising:
a slit (36) for exposing the cutting edge (22) of the replaceable blade member (20) overlapped on the overlap plate portion (31) is formed between the overlap plate portion (31) and the curl prevention plate portion (32), wherein the slit (36) extends along the longitudinal direction of the overlap plate portion (31) and intersects a cutting direction, and wherein the curl prevention plate (32) is configured such that a thin slice, which is cut from a sample by relative movement of the replaceable blade member (20) and the sample in the cutting direction, overrides the curl prevention plate portion (32) through the slit (36),
the replaceable blade member (20) is fixed to the overlap plate portion (31),
the cutting edge (22) of the replaceable blade member (20) is arranged so as to be exposed from the slit (36), and **characterised in that** :
the curl prevention plate portion (32) is arranged obliquely so as to form an obtuse angle with respect to the overlap plate portion (31), and
the curl prevention plate portion (32) includes a supporting frame (32B), which is formed in a frame shape and connected to the overlap plate portion (31), and a curl prevention member (32A) attached to and overlapped on the supporting frame (32B).

2. The replaceable blade (10) according to claim 1, **characterized in that** a plurality of through holes (39) are formed in the curl prevention plate portion (32).

3. The replaceable blade (10) according to claim 1, **characterized in that** the curl prevention plate portion (32) is formed of a transparent member.

4. The replaceable blade (10) according to claim 1, **characterized in that** the surface of the curl prevention plate portion (32) is coated with a lubricant.

5. The replaceable blade (10) according to claim 1, **characterized in that** the curl prevention member (32A) is folded into the supporting frame (32B) so as to be overlapped on the supporting frame (32B).

6. The replaceable blade (10) according to claim 1, **characterized in that** the supporting frame (32B) is provided with a grip portion (47) for gripping the curl prevention member (32A), and the curl prevention member (32A) is gripped by the grip portion (47) and thereby overlapped on the supporting frame (32B).

7. The replaceable blade (10) according to claim 1, **characterized in that** an offset amount at the side edge of the slit (36) in a cutting direction with respect to the cutting edge (22) of the replaceable blade member (20) is set such that the offset amount is made longer at one end in the longitudinal direction than at the opposite end.

## Patentansprüche

1. Eine austauschbare Klinge (10) für ein Mikrotom mit einem austauschbaren Klingenteil (20) und einer Aufrollpräventionsplatte (30) für das austauschbare Klingenteil (20), wobei die Aufrollpräventionsplatte (30) aufweist:
einen Überlappungsplattenabschnitt (31), der an dem austauschbaren Klingenteil (20) überlappt; und
einen Aufrollpräventionsplattenabschnitt (32), welcher aufweist einen Schutzabschnitt (33), der mit dem Überlappungsplattenabschnitt (31) verbunden ist, und weiter vor einer Schneidkante (22) des austauschbaren Klingenteils (20) angeordnet ist, wobei die Aufrollpräventionsplatte (30) ferner aufweist:
einen Spalt (36) zum Freilegen der Schneidkante (22) des austauschbaren Klingenteils (20), das an dem Überlappungsplattenabschnitt (31) überlappt, wobei der Spalt (36) geformt ist zwischen dem Überlappungsplattenabschnitt (31) und dem Aufrollpräventionsplattenabschnitt (32), wobei der Spalt (36) sich entlang der Längsrichtung des Überlappungsplattenabschnitts (31) erstreckt und eine Schnittrichtung kreuzt, und wobei der Aufrollpräventionsplattenabschnitt (32) so konfiguriert ist, dass eine dünne Scheibe, welche von einer Probe mittels einer relativen Bewegung des austauschbaren Klingenteils (20) und der Probe in der Schnittrichtung geschnitten ist, durch den Spalt (36) hindurch auf dem Aufrollpräventionsplattenabschnitt (32) gleitet,
wobei das austauschbare Klingenteil (20) an dem Überlappungsplattenabschnitt (31) befestigt ist,
wobei die Schneidkante (22) des austauschbaren Klingenteils (20) so angeordnet ist, dass sie von dem Spalt (36) freiliegt, **dadurch gekennzeichnet, dass**:
der Aufrollpräventionsplattenabschnitt (32) schräg angeordnet ist, um einen stumpfen Winkel in Bezug auf den Überlappungsplattenabschnitt (31) zu formen, und
der Aufrollpräventionsplattenabschnitt (32) aufweist: einen Stützrahmen (32B), der in einer Rahmenform geformt ist und mit dem Überlappungsplattenabschnitt (31) verbunden ist, und ein Aufrollpräventionsteil (32A), das an den Stützrahmen (32B) angeschlossen ist und daran überlappt.

2. Die austauschbare Klinge (10) gemäß Anspruch 1, **dadurch gekennzeichnet, dass** eine Mehrzahl von Durchgangslöchern (39) in dem Aufrollpräventionsplattenabschnitt (32) geformt ist.

3. Die austauschbare Klinge (10) gemäß Anspruch 1, **dadurch gekennzeichnet, dass** der Aufrollpräventionsplattenabschnitt (32) aus einem transparenten Material geformt ist.

4. Die austauschbare Klinge (10) gemäß Anspruch 1, **dadurch gekennzeichnet, dass** die Fläche des Aufrollpräventionsplattenabschnitts (32) mit einem Schmiermittel beschichtet ist.

5. Die austauschbare Klinge (10) gemäß Anspruch 1, **dadurch gekennzeichnet, dass** das Aufrollpräventionsteil (32A) in den Stützrahmen (32B) gefaltet ist, um an dem Stützrahmen (32B) überlappt zu sein.

6. Die austauschbare Klinge (10) gemäß Anspruch 1, **dadurch gekennzeichnet, dass** der Stützrahmen (32B) versehen ist mit einem Greifabschnitt (47) zum Greifen des Aufrollpräventionsteils (32A), und das Aufrollpräventionsteil (32A) von dem Greifabschnitt (47) gegriffen ist und dadurch an dem Stützrahmen (32B) überlappt ist.

7. Die austauschbare Klinge (10) gemäß Anspruch 1, **dadurch gekennzeichnet, dass** ein Versatzbetrag an der seitlichen Kante des Spaltes (36) in einer Schnittrichtung in Bezug auf die Schneidkante (22) des austauschbaren Klingenteils (20) so festgesetzt ist, dass der Versatzbetrag an einem Ende in der Längsrichtung größer ist als an dem gegenüberliegenden Ende.

## Revendications

1. Lame remplaçable (10) pour microtome présentant un élément de lame remplaçable (20) et une plaque d'empêchement d'incurvation (30) pour l'élément de lame remplaçable (20), la plaque d'empêchement d'incurvation (30) comprenant :
une partie de plaque de chevauchement (31) qui chevauche l'élément de lame remplaçable (20) ; et
une partie de plaque d'empêchement d'incurvation (32) qui présente une partie de protection (33) qui est connectée à la partie de plaque de chevauchement (31) et en outre disposée en avant d'un bord coupant (22) de l'élément de lame remplaçable (20), la plaque d'empêchement d'incurvation (30) comprenant en outre :
une fente (36) destinée à exposer le bord coupant (22) de l'élément de lame remplaçable (20) que chevauche la partie de plaque de chevauchement (31), est formée entre la partie de plaque de chevauchement (31) et la partie de plaque d'empêchement d'incurvation (32), dans laquelle la fente (36) s'étend le long de la direction longitudinale de la partie de plaque de chevauchement (31) et coupe une direction de coupe, et dans laquelle la plaque d'empêchement d'incurvation (32) est configurée de telle sorte qu'une tranche mince, qui est coupée à partir d'un échantillon par un déplacement relatif de l'élément de lame remplaçable (20) et de l'échantillon dans la direction de coupe, dépasse de la partie de plaque d'empêchement d'incurvation (32) à travers la fente (36) ;
l'élément de lame remplaçable (20) est fixé sur la partie de plaque de chevauchement (31) ;
le bord coupant (22) de l'élément de lame remplaçable (20) est agencé de façon à être exposé à partir de la fente (36), et **caractérisée en ce que** :
la partie de plaque d'empêchement d'incurvation (32) est agencée de manière oblique pour former un angle obtus par rapport à la partie de plaque de chevauchement (31) ; et
la partie de plaque d'empêchement d'incurvation (32) comprend un cadre d'appui (32B), qui est formé en une forme de cadre et connecté à la partie de plaque de chevauchement (31), et un élément d'empêchement d'incurvation (32A) fixé au cadre d'appui (32B) en le chevauchant.

2. Lame remplaçable (10) selon la revendication 1, **caractérisée en ce qu'**une pluralité de trous traversants (39) sont formés dans la partie de plaque d'empêchement d'incurvation (32).

3. Lame remplaçable (10) selon la revendication 1, **caractérisée en ce que** la partie de plaque d'empêchement d'incurvation (32) est constituée d'un élément transparent.

4. Lame remplaçable (10) selon la revendication 1, **caractérisée en ce que** la surface de la partie de plaque d'empêchement d'incurvation (32) est revêtue d'un lubrifiant.

5. Lame remplaçable (10) selon la revendication 1, **caractérisée en ce que** l'élément d'empêchement d'incurvation (32A) est plié dans le cadre d'appui (32B) de façon à chevaucher le cadre d'appui (32B).

6. Lame remplaçable (10) selon la revendication 1, **caractérisée en ce que** le cadre d'appui (32B) est doté d'une partie de poignée (47) destinée à saisir l'élément d'empêchement d'incurvation (32A), et l'élément d'empêchement d'incurvation (32A) est saisi par la partie de poignée (47) et chevauche ainsi le cadre d'appui (32B).

7. Lame remplaçable (10) selon la revendication 1, **caractérisée en ce qu'**une quantité de décalage au niveau du bord latéral de la fente (36) dans une direction de coupe par rapport au bord coupant (22) de l'élément de lame remplaçable (20), est réglée de telle sorte que la quantité de décalage soit plus longue au niveau d'une extrémité dans la direction longitudinale qu'au niveau de l'extrémité opposée.
